# EUROPÄISCHE PATENTSCHRIFT

(11) **EP 2 008 917 B1**
(45) Veröffentlichungstag und Bekanntmachung des Hinweises auf die Patenterteilung: **17.02.2016**
(21) Anmeldenummer: 08010667.7
(22) Anmeldetag: 12.06.2008
(51) Int. Cl.: B62D 25/08, B62D 21/15, B60K 11/04

(54) **Vorderbau für ein Kraftfahrzeug**
Front part for a motor vehicle
Partie avant pour véhicule automobile

(30) Priorität: 28.06.2007 DE 102007029857
(43) Veröffentlichungstag der Anmeldung: 31.12.2008
(73) Patentinhaber: GM Global Technology Operations LLC, Detroit, MI 48265-3000 (US)
(72) Erfinder: Emmrich, Ralf, 55595 Burgsponheim (DE); Greb, Thilo-Stefan, 35325 Nieder-Ohmen (DE); Kerkewitz, Richard, 55270 Klein-Winternheim (DE)
(74) Vertreter: Spitzfaden, Ralf

(56) Entgegenhaltungen:
- WO-A-2008/053874
- DE-A1-102006 023 051
- JP-A- 2004 322 706
- JP-A- 2008 037 112
- US-A1- 2008 308 333

## Beschreibung

Die Erfindung betrifft einen Vorderbau für ein Kraftfahrzeug mit einem in einer Karosserie angeordneten Subframe, mit einem Kühlungsmodul und mit einem in Fahrtrichtung von dem Subframe abstehenden Halter zur Anbindung des Kühlungsmoduls an den Subframe, wobei das Kühlungsmoduls sich an den freien Enden der Halter abstützt und der Halter eine Führungsbahn aufweist, die von der Unterseite des Kühlungsmoduls bis zu der Oberseite des Subframes geführt ist.

Solche Vorderbauten werden bei heutigen Kraftfahrzeugen häufig eingesetzt und sind aus der Praxis bekannt. Bei diesen Vorderbauten ist das Kühlungsmodul nahe des in Fahrtrichtung weisenden Endes des Kraftfahrzeuges an dem Subframe befestigt. Der Subframe haltert zudem eine Brennkraftmaschine des Kraftfahrzeuges. Bei einem Frontalcrash des Kraftfahrzeuges wird der Vorderbau des Kraftfahrzeuges verformt. Bei dem bekannten Vorderbau kann hierdurch zudem das Kühlungsmodul beschädigt werden. Zudem besteht die Gefahr, dass das Kühlungsmodul auf den Subframe gedrückt wird. Dies führt bereits bei einem leichten Crash zu einem mit sehr hohen Kosten verbundenen Reparaturaufwand am Kraftfahrzeug. Bereits bei geringen Verformungen des Vorderbaus muss daher auch meist das Kühlungsmodul ausgewechselt werden. Das Kühlungsmodul weist häufig neben einem Wasserkühler für eine Brennkraftmaschine weitere Elemente, wie beispielsweise einen Ladeluftkühler oder einen Kondensator einer Klimaanlage des Kraftfahrzeuges auf und ist ein sehr kostenintensives Bauteil.

Aus der nachveröffentlichten WO 2008/053874 ist ein Vorderbau bekannt, bei dem das Kühlungsmodul mit vier Haltern an der unteren und oberen Querstrebe eines Rahmens befestigt ist. Die Halter stehen von den Querstreben ab und weisen jeweils ein Langloch auf, das im Abstand zur jeweiligen Querstrebe beginnt und noch vor dieser endet. Stifte am Kühlungsmodul stecken im Abstand zum Rahmen in den Langlöchern. Bei einem Crash wird das Kühlungsmodul gegen den Rahmen verschoben, wobei die Stifte in den Langlöchern geführt werden.

Der Erfindung liegt daher das Problem zugrunde einen Vorderbau der eingangs genannten Art so weiterzubilden, dass er bei einem Crash des Kraftfahrzeuges eine Beschädigung am Kühlungsmodul weitgehend vermeidet.

Dieses Problem wird erfindungsgemäß dadurch gelöst, dass die Führungsbahn entgegen der Fahrtrichtung des Kraftfahrzeuges ansteigend geneigt angeordnet ist.

Durch diese Gestaltung wird vermieden, dass bei einem Crash des Kraftfahrzeuges das Kühlungsmodul auf den Subframe gedrückt oder von dem Halter beschädigt wird. Hierdurch wird die Gefahr einer Beschädigung des Kühlungsmoduls weitgehend vermieden. Durch die Führungsbahn wird sichergestellt, dass bei einer Trennung des Kühlungsmoduls von dem Halter das Kühlungsmodul auf der Führungsbahn aufliegt. Ein weiterer Vorteil dieser Gestaltung besteht darin, dass das Kraftfahrzeug nach dem Crash noch fahrbereit ist und keine Flüssigkeiten auslaufen.

Häufig wird das Kühlungsmodul aus Gründen des Fußgängeraufprallschutzes möglichst tief angeordnet, damit die Oberseite des Kühlungsmoduls einem Aufprall des Fußgängers auf die Oberseite des Vorderbaus keinen zusätzlichen Widerstand entgegensetzt. Der Subframe lässt sich jedoch nicht immer ebenfalls tief anordnen. Das Kühlungsmodul lässt sich gemäß der Erfindung bei einem Crash an dem Sub-frame vorbeiführen, wenn die Führungsbahn entgegen der Fahrtrichtung des Kraftfahrzeuges ansteigend geneigt angeordnet ist. Durch diese Gestaltung wird das Kühlungsmo-dul beim Entlanggleiten auf der Führungsbahn angehoben und gelangt anschließend über den Subframe.

Zur weiteren Verringerung der möglichen Beschädigung des Kühlungsmoduls trägt es gemäß einer vorteilhaften Weiterbildung der Erfindung bei, wenn die Befestigung des Kühlungsmoduls an dem Halter einen Haltepin mit einer im Vergleich zu der Festigkeit des Kühlungsmoduls geringen Festigkeit aufweist. Hierdurch wird bei einem Crash die Bewegung des Kühlungsmoduls frühzeitig freigegeben, bevor eine Beschädigung des Kühlungsmoduls auftritt.

Die Last, unter der der Haltepin die Bewegung des Kühlungsmoduls bei einem Crash freigibt, lässt sich gemäß einer anderen vorteilhaften Weiterbildung der Erfindung einfach einstellen, wenn der Haltepin vertikal angeordnet ist. Durch diese Gestaltung wird der Haltepin bei einer Bewegung des Kühlungsmoduls in Richtung Subframe auf Scherung belastet.

Eine Entkoppelung von Schwingungen von dem Subframe auf das Kühlungsmodul lässt sich gemäß einer anderen vorteilhaften Weiterbildung der Erfindung einfach erreichen, wenn die Befestigung des Kühlungsmoduls an dem Halter einen Gummipuffer hat.

Das Kühlungsmodul wird im Betrieb des Kraftfahrzeuges zuverlässig von dem Halter abgestützt, wenn das Kühlungsmodul auf dem Gummipuffer aufliegt und wenn die Unterseite des Gummipuffers mit dem Halter verbunden ist. Eine Bewegung des Kühlungsmoduls bei einem Crash des Kraftfahrzeuges wird durch diese Gestaltung jedoch nicht beeinträchtigt.

Zur Vereinfachung der Montage des Kühlungsmoduls trägt es gemäß einer anderen vorteilhaften Weiterbildung der Erfindung bei, wenn der Gummipuffer eine zentrische Ausnehmung aufweist und wenn der Haltepin passend in die Ausnehmung eindringt. Hierdurch kann das Kühlungsmodul bei der Montage einfach vertikal auf den mit dem Halter verbundenen Gummipuffer aufgesteckt werden.

Die Anbindung des Halters an dem Subframe gestaltet sich konstruktiv besonders einfach, wenn der Halter mit dem Subframe verschraubt ist.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: eine Seitenansicht eines Kraftfahrzeuges mit einem erfindungsgemäßen Vorderbau,
- Fig. 2: eine stark vergrößerte perspektivische Darstellung eines Teilbereichs des erfindungsgemäßen Vorderbaus aus Figur 1,
- Fig. 3: einen Teilschnitt durch eine Anbindung eines Kühlungsmoduls an einen Subframe des erfindungsgemäßen Vorderbaus aus Figur 1.

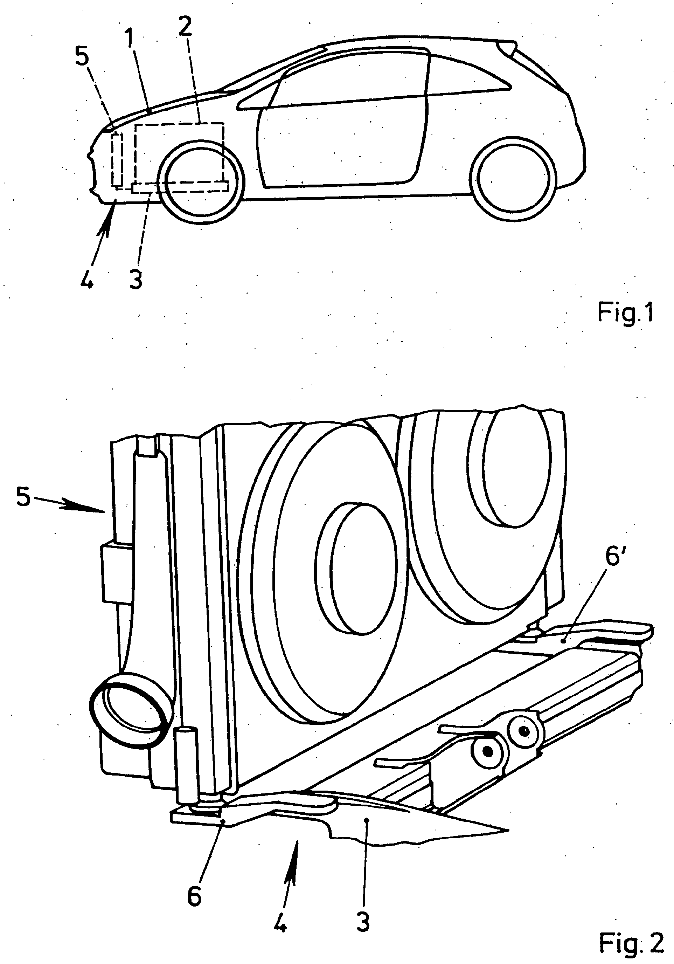

Figur 1 zeigt ein Kraftfahrzeug mit einer Fronthaube 1 und einer unter der Fronthaube 1 angeordneten Brennkraftmaschine 2. Die Brennkraftmaschine 2 ist auf einem Subframe 3 eines Vorderbaus 4 des Kraftfahrzeuges angeordnet. Das Subframe 3 ist an einer Karosserie des Kraftfahrzeuges befestigt. In Fahrtrichtung vor der Brennkraftmaschine 2 hat das Kraftfahrzeug ein Kühlungsmodul 5.

Figur 2 zeigt perspektivisch in einem Teilbereich des Vorderbaus 4 aus Figur 1, dass das Kühlungsmodul 5 mittels zweier seitlich angeordneter Halter 6, 6' an dem Subframe 3 befestigt ist. Die Halter 6, 6' stehen in Fahrtrichtung von dem Subframe 3 ab. Auf den freien Enden der Halter 6, 6' stützt sich das Kühlungsmodul 5 ab.

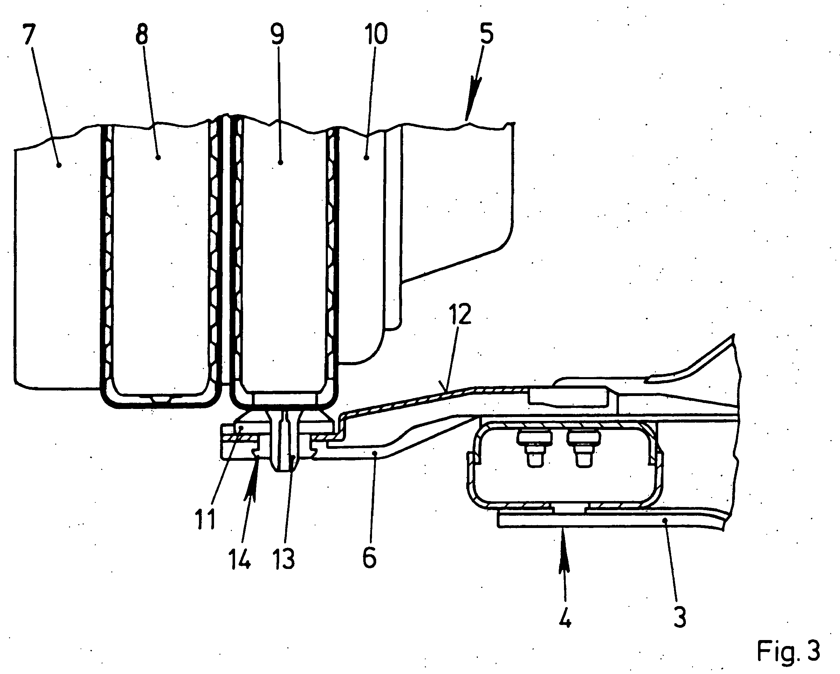

Figur 3 zeigt einen Teilschnitt durch einen der Halter 6 und angrenzende Bereiche des Subframes 3, und des Kühlungsmoduls 5. Das dargestellte Kühlungsmodul 5 ist als bauliche Einheit aus einem Kondensator 7 einer Klimaanlage, einem Ladeluftkühler 8 eines Turboladers, einem Wasserkühler 9 der in Figur 1 dargestellten Brennkraftmaschine 2 und einer Ventilatoreneinheit 10 ausgebildet und stützt sich auf einem am freien Ende des Halters 6 befestigten Gummipuffer 11 ab. Der Halter 6 hat eine Führungsbahn 12, welche von der Unterkante des Kühlungsmoduls 5 bis über die Oberseite des Subframes 3 geführt ist. Die Führungsbahn 12 steigt entgegen der Fahrtrichtung des Kraftfahrzeuges an. Das Kühlungsmodul 5 hat einen vertikalen Haltepin 13, welcher passend in eine Ausnehmung 14 des Gummipuffers 11 eindringt und eine im Vergleich zu der Festigkeit des Kühlungsmoduls 5 geringe Festigkeit aufweist. Bei einer beispielsweise durch einen Crash des Kraftfahrzeuges hervorgerufenen Belastung des Kühlungsmoduls 5 sind die genannten Festigkeiten derart ausgelegt, dass der Haltepin 13 zerstört und das intakte Kühlungsmodul 5 über die Führungsbahn 12 bis über den Subframe 3 gleiten kann. Hierdurch wird die Gefahr einer Beschädigung des Kühlungsmoduls 5 und ein damit verbundenes Auslaufen von Flüssigkeiten vermieden. Der Halter 6 ist an dem Subframe 3 festgeschraubt.

### Bezugszeichenliste

- 1: Fronthaube
- 2: Brennkraftmaschine
- 3: Subframe
- 4: Vorderbau
- 5: Kühlungsmodul
- 6: Halter
- 7: Kondensator
- 8: Ladeluftkühler
- 9: Wasserkühler
- 10: Ventilatoreneinheit
- 11: Gummipuffer
- 12: Führungsbahn
- 13: Haltepin
- 14: Ausnehmung

## Patentansprüche

1. Vorderbau für ein Kraftfahrzeug
mit einem in einer Karosserie angeordneten Subframe (3), mit einem Kühlungsmodul (5) und mit einem in Fahrtrichtung von dem Subframe (3) abstehenden Halter (6, 6') zur Anbindung des Kühlungsmoduls (5) an den Subframe (3), wobei das Kühlungsmodul (5) sich an den freien Enden der Halter (6, 6') abstützt und der Halter (6, 6') eine Führungsbahn (12) aufweist, die von der Unterseite des Kühlungsmoduls (5) bis zu der Oberseite des Subframes (3) geführt ist,
**dadurch gekennzeichnet,**
**dass** die Führungsbahn (12) entgegen der Fahrtrichtung des Kraftfahrzeuges ansteigend geneigt angeordnet ist.

2. Vorderbau nach Anspruch 1, **dadurch gekennzeichnet, dass** die Befestigung des Kühlungsmoduls (5) an dem Halter (6, 6') einen Haltepin (13) mit einer im Vergleich zu der Festigkeit des Kühlungsmoduls (5) geringen Festigkeit aufweist.

3. Vorderbau nach Anspruch 2, **dadurch gekennzeichnet, dass** der Haltepin (113) vertikal angeordnet ist.

4. Vorderbau nach einem der vorhergehenden Ansprüche, **dadurch gekennzeichnet, dass** die Befestigung des Kühlungsmoduls (5) an dem Halter (6, 6') einen Gummipuffer (11) hat.

5. Vorderbau nach Anspruch 4, **dadurch gekennzeichnet, dass** das Kühlungsmodul (5) auf dem Gummipuffer (11) aufliegt und dass die Unterseite des Gummipuffers (11) mit dem Halter (6, 6') verbunden ist.

6. Vorderbau nach Anspruch 4 oder 5, **dadurch gekennzeichnet, dass** der Gummipuffer (11) eine zentrische Ausnehmung (14) aufweist und dass der Haltepin (13) passend in die Ausnehmung (14) eindringt.

7. Vorderbau nach einem der vorhergehenden Ansprüche, **dadurch gekennzeichnet, dass** der Halter (6, 6') mit dem Subframe (3) verschraubt ist.

## Claims

1. A front part for a motor vehicle, comprising a subframe (3) arranged in a car body, a cooling module (5), and a retainer (6, 6'), which protrudes from the subframe (3) in the driving direction, for connecting the cooling module (5) to the subframe (3), wherein the cooling module (5) is supported on the free ends of the retainers (6, 6'), and the retainer (6, 6') comprises a guideway (12) which is guided from the lower side of the cooling module (5) up to the upper side of the subframe (3), **characterized in that** the guideway (12) is arranged to rise in an inclined manner against the driving direction of the motor vehicle.

2. A front part according to claim 1, **characterized in that** the fastening of the cooling module (5) on the retainer (6, 6') comprises a retaining pin (13) of a strength that is lower in comparison with the strength of the cooling module (5).

3. A front part according to claim 2, **characterized in that** the retaining pin (113) is arranged vertically.

4. A front part according to one of the preceding claims, **characterized in that** the fastening of the cooling module (5) on the retainer (6, 6') comprises a rubber buffer (11).

5. A front part according to claim 4, **characterized in that** cooling module (5) rests on the rubber buffer (11), and the lower side of the rubber buffer (11) is connected to the retainer (6, 6').

6. A front part according to claim 4 or 5, **characterized in that** the rubber buffer (11) comprises a centric recess (14), and the retaining pin (13) enters the recess (14) in a matching fashion.

7. A front part according to one of the preceding claims, **characterized in that** the retainer (6, 6') is screwed to the subframe (3).

## Revendications

1. Avant-corps pour un véhicule à moteur avec un faux châssis (3) disposé dans une carrosserie, avec un module de refroidissement (5) et avec un support (6, 6') qui dépasse du faux châssis (3) dans le sens de la marche pour la fixation du module de refroidissement (5) au faux châssis (3), dans lequel le module de refroidissement (5) s'appuie sur l'extrémité libre du support (6, 6') et le support (6, 6') présente une piste de guidage (12) qui va de la face inférieure du module de refroidissement (5) à la face supérieure du faux châssis (3), **caractérisé en ce que** la piste de guidage (12) est disposée avec une inclinaison montante en sens inverse du sens de la marche du véhicule à moteur.

2. Avant-corps selon la revendication 1, **caractérisé en ce que** la fixation du module de refroidissement (5) sur le support (6, 6') comprend une goupille de fixation (13) ayant une solidité inférieure à la solidité du module de refroidissement (5).

3. Avant-corps selon la revendication 2, **caractérisé en ce que** la goupille de fixation (113) est disposée verticalement.

4. Avant-corps selon l'une des revendications principales, **caractérisé en ce que** la fixation du module de refroidissement (5) sur le support (6, 6') comporte un tampon en caoutchouc (11).

5. Avant-corps selon la revendication 4, **caractérisé en ce que** le module de refroidissement (5) repose sur le tampon en caoutchouc (11) de telle manière que la face inférieure du tampon en caoutchouc (11) est reliée au support (6, 6').

6. Avant-corps selon la revendication 4 ou 5, **caractérisé en ce que** le tampon en caoutchouc (11) présente un creux centré (14) et **en ce que** la goupille de fixation (13) pénètre dans le creux (14) en s'y ajustant.

7. Avant-corps selon l'une des revendications précédentes, **caractérisé en ce que** le support (6, 6') est vissé au faux châssis (3).
